# EUROPEAN PATENT SPECIFICATION

(11) **EP 1 011 306 B1**
(45) Date of publication and mention of the grant of the patent: **07.08.2002**
(21) Application number: 97950117.8
(22) Date of filing: 05.11.1997
(51) Int. Cl.: A01D 34/00, A01G 1/12

(54) **ACCESSORY DEVICE FOR ROTATING-HEAD GARDEN CUTTERS**
ZUSATZVORRICHTUNG FÜR DREHKOPFGARTENSCHNEIDER
DISPOSITIF ACCESSOIRE POUR COUPEUSES DE JARDIN A TETE ROTATIVE

(30) Priority: 07.11.1996 IT FI960130 U
(43) Date of publication of application: 28.06.2000
(73) Proprietor: Arno Plast S.R.L., 50010 Rignano Sull'Arno (IT)
(72) Inventor: BETTINI, Pierantonio, I-50010 Rignano Sull'Arno (IT); AGLIETTI, Dario, I-50066 Reggello (IT)
(74) Representative: Gervasi, Gemma, Dr.
(86) International application number: EP9706133
(87) International publication number: WO9819515

(56) References cited:
- WO-A-97/44998
- DE-A- 19 513 153
- DE-U- 29 622 609
- US-A- 4 187 577
- US-A- 4 227 280
- US-A- 5 279 102

## Description

### Field of the invention.

The present invention relates to a gardening tool and particularly to a suction device suitable to be used as an accessory for traditional garden cutters of the kind comprising a cutting blade or wire, driven by a rotating head. In these cutters the head is connected to a fuel or electric engine by an elongated arm inside which the transmission elements are arranged.

The present device is specially intended for cleaning the garden of leaves and other debris such as twigs and the like.

### Background of the art.

At present, to remove leaves traditional rakes and general purpose suction devices are utilized. These suction devices comprise a vacuum chamber to which a flexible duct which is open at the other end is connected. When operating, leaves and debris are removed from the ground by the open end of the duct communicating with the vacuum chamber. Then, they pass through the flexible duct and are stored inside the vacuum chamber or inside a special bag.

Such devices present some drawbacks in that they have big overall dimensions and relatively high costs (which makes the use of them unprofitable for the cleaning of small lawns) and need to have an electric supply line close by (which makes them unsuitable for several applications).

High power lawn-mowers are also known which simultaneously cut the grass and suck in the already cut grass pieces.

Unfortunately, the lawn-mowers are both quite expensive (in terms of both initial cost and maintenance) and do not work well if the ground to be cleaned is uneven, as often it is, and when big quantities of leaves need to be removed.

From US 4,227,280 it is also known a vacuum-blower attachment for filament trimmers which can be fixed to the trimmer instead of the rotating head. The attachment is intended to clear the ground after that the filament trimmer has been used to cut a grass and it is provided with a collecting bag into which the aspirated debris (when the vacuum function is selected) are stored to be subsequently disposed.

The attachment presents some drawbacks because the user has to perform various operations (cutting the leaves by the filament trimmer provided with the rotating head and then cleaning the ground after replacement of the rotating head with the attachment).

A further disadvantage consists in that, once they have been aspirated in the collecting bag, the leaves and the other debris occupy a relatively large volume of the bag so that it has to be frequently emptied or replaced.

### Aim of the invention.

A first aim of the invention is to overcome the aforesaid drawbacks presented by the known-art and to realize a low-cost and easy-to-use device suitable for several applications.

A second aim is to introduce new accessories to be sold together with gardening devices and more specifically whit rotating-head garden cutters.

### Summary of the invention.

The above mentioned aims have been reached according to the invention by a suction device suitable to be used as accessory for rotating-head garden cutters. According to the invention the suction device is constituted by a dual action helix element able to both cut and suck from the ground leaves and debris. The helix can be mounted instead of the garden cutter rotating head and rotates inside a suction chamber which is fixed to the cutter arm by securing means. The suction chamber has an outlet duct through which the debris are conveyed up to a collecting bag.

The device comprises an adjustable joint which allows it to be applied to garden-cutters having different designs. For example garden-cutters conceived for users of different height and having different angles between the plane of the ground and the arm axis.

A first advantage of the invention is that the device has low costs, reduced overall dimensions, and it is easy to be applied to any kind of rotating head garden cutters, particularly to garden cutter having a rotating head with cutting wire.

A second advantage is that all the components can be made by plastic moulding.

A third advantage is that the debris volume is reduced due to the cutting action of the helix element.

### Brief description of the drawings.

Further advantages will be apparent from the following drawings, given as a non limitative example, in which:
- fig.1 shows a prospective view of a suction device according to the invention;
- fig.2 shows a second embodiment of the suction device of the invention;
- fig.s 3a,3b respectively illustrate a rear and a sectional view of the device of the invention having an adjustable joint.

### Detailed description of the invention.

With reference to the annexed drawings, a suction device according to the invention comprises a suction chamber 1 made of two half-parts, symmetrical according to a longitudinal plane and joined by screws or other traditional connecting means 8. Chamber 1 is placed around and laterally closes the driving shaft of a garden cutter and is fixed to its arm 3 by removable securing means 9, for example screws means. Chamber 1 is a substantially hollow cylinder having a lower suction sleeve 4 opened at the bottom. On the rear side chamber 1 ends with a second outlet sleeve 5 having dimensions correlated with these of sleeve 4, in order to optimize the suction efficiency. Sleeve 5 leads to a conveying duct 6, preferably a flexible duct, through which the debris are conveyed up to a collecting bag 7 fixed to the garden cutter arm 3 by removable securing means 10.

Inside the chamber 1 a suction helix 2 connected in a traditional way to the driving shaft of the garden cutter can rotate. When operating, the rotation of the helix 2 causes a suction effect by which the leaves and other debris which lay near to the sleeve 4 are aspirated, cut by the same helix and conveyed into the collecting bag 7. To increase the suction effect, the helix blades can be provided with end brushes which touches the corresponding portion of the internal walls of chamber 1.

Once the collecting bag has been filled it can be either emptied or replaced by a new disposable bag.

In a preferred embodiment, means 8 and 9 of chamber 1 are screw means or quick connections, while means 10 to fix bag 7 to the arm 3 are quick connections, for example a plastic open ring which can be elastically opened wide to be placed around the arm 3.

Advantageously, most of the device's components (chamber 1, sleeves 4,5, helix 2, bag 7) can be inexpensively manufactured by plastic moulding.

The engine and the handle of the garden cutter are not shown in the figures, but it is evident that a device according to the invention can be applied to any kind of rotating head garden cutter, powered by either fuel or electric engines, but having a driving shaft on which the helix can be mounted and a arm to which the head 1 can be fixed.

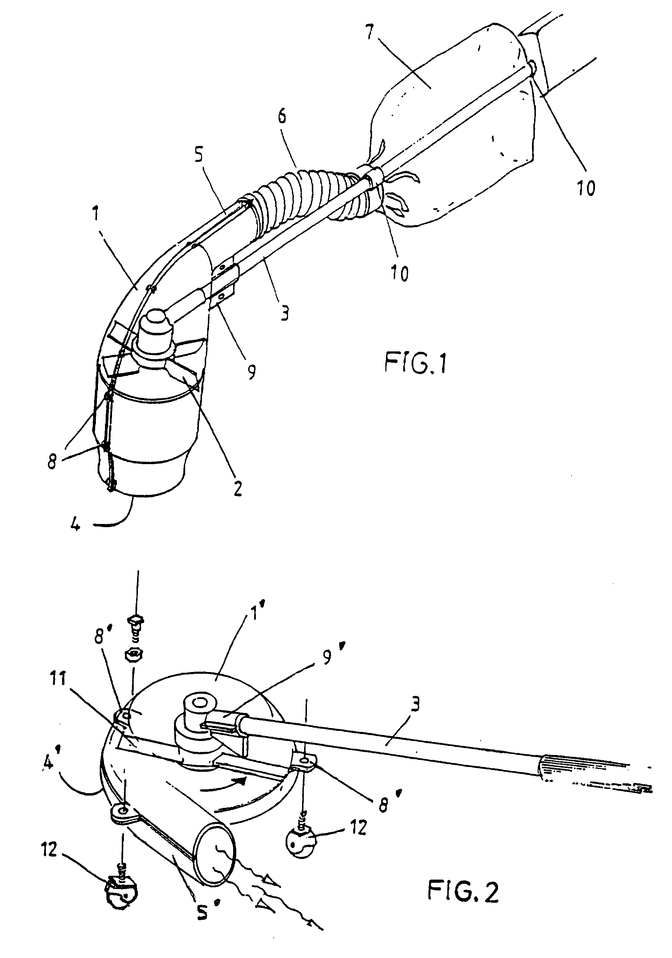

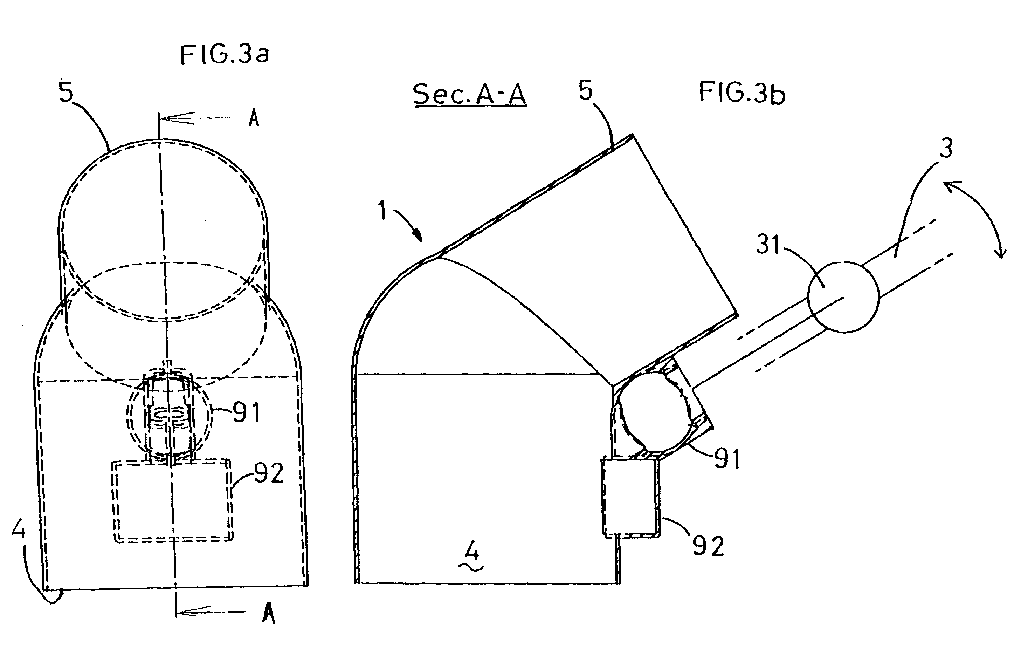

As illustrated in figure 2, the chamber 1 shape is substantially flat and have an horizontal position.

In this case, the chamber 1 is a shell-shaped case provided with an outlet duct 5 which is placed lateral to the helix. A plurality of wheels 12 can be mounted onto the head 1 to ensure an adjustable distance of the head from the ground. This embodiment is particularly suitable to use the device as a traditional suction device or a traditional lawn mower.

In the embodiment shown in fig.2, the helix 2 is constituted by a blade 11, preferably a metal blade, which rotates close to the opening 4. The blade shape is specifically designed in order to both grind and suck the leaves and the other debris.

Fig.s 3a,3b show a device according to the invention in which the means securing the suction chamber 1 to the garden-cutter arm 3 are constituted by a spherical joint 91 comprising two symmetrical half-parts each built into the corresponding suction chamber half-part. Joint 91 is closed by traditional means around a substantially spherical body 31 which is fixed to the arm 3 in a predetermined position. The junction between joint 91 and spherical body 31 allows users of any height to adjust the angle formed between the plane of the opening of the suction chamber (which has to be kept horizontal) and the inclination of the arm the most appropriate for the user. In this embodiment, a box 92 is built in to the chamber 1 walls to house the safety shield which is usually placed over the rotating blade or wire of the garden-cutter and which is not removed from the arm when replacing the rotating head with a helix according to the invention.

## Claims

1. Accessory suction device for rotating-head garden cutters comprising suction means (2,11) mounted on the drive shaft instead of the rotating head, conveying means (1,1',4,4',5,5',6,6') and collecting means (7), said conveying and collecting means being fixed to a part (3) of the garden cutter by removable securing means (9, 91, 10), **characterized in that** said suction means consist of dual action helix elements (2,11) by which leaves and other debris are cut and aspirated through said conveying means (1,1',4,4',5,5',6,6') up to said collecting means (7).

2. Device according to claim 1, **characterized in that** said conveying means comprise a chamber (1) having a suction inlet duct (4) and an outlet duct (5) leading into said collecting means (7) through a further conveying duct (6).

3. Device according to claim 2, **characterized in that** said chamber (1) is constituted by two symmetrical half-parts joined by removable connecting means (8).

4. Device according to claim 1, **characterized in that** said removable securing means (9,10) are screw means.

5. Device according to claim 1, **characterized in that** said part (3) is the garden-cutter arm.

6. Device according to claim 2, **characterized in that** said further duct (6) is a flexible duct.

7. Device according to claim 2, **characterized in that** said collecting means (7) are constituted by a removable bag.

8. Device according to claim 7, **characterized in that** said bag is a disposable bag.

9. Device according to claim 1, **characterized in that** said helix suction means (2) are constituted by a plastic helix.

10. Device according to claim 1, **characterized in that** at least one component from: room (1), ducts (4,5), bag (7), is made of plastic material.

11. Device according to claim 1, **characterized in that** said helix suction means (2) are constituted by a helix shaped blade (11) rotating near to the suction opening of duct (4).

12. Device according to claim 11, **characterized in that** said blade is made of metal.

13. Device according to claim 1, **characterized in that** said conveying means (1',4',5',6') are horizontally arranged.

14. Device according to claim 13, **characterized in that** said conveying means comprise a shield-shaped chamber (1') having a lateral outlet duct (5').

15. Device according to claim 14, **characterized in that** it comprises a plurality of wheels (12).

16. Device according to claim 15, **characterized in that** said wheels can be positioned at different heights.

17. Device according to claim 1, **characterized in that** said means securing the suction chamber (1) to the garden-cutter arm (3) are constituted by a spherical joint (91) comprising two spherical-cap shaped half-parts each built into the corresponding suction chamber half-part; said spherical cap shaped half part are pushed together on to a substantially spherical body (31) which is fixed to the arm (3) in a predetermined position.

18. Device according to claim 17, **characterized in that** said chamber (1) comprises a box (92) intended to house the safety shield which can optionally be placed over the garden cutter rotating head.

## Patentansprüche

1. Zusatzsaugeinrichtung für Gartenschneidgeräte mit Drehkopf bestehend aus einer Saugeinrichtung (2,11), die auf der Antriebswelle und nicht am Drehkopf montiert ist, einer Transporteinrichtung (1,1',4,4',5,5',6,6') und einer Sammeleinrichtung (7), wobei die genannte Transport- bzw. Sammeleinrichtung an einem Teil (3) des Gartenschneidgerätes durch eine abnehmbare Sicherungsvorrichtung (9,91,10) befestigt ist, **dadurch gekennzeichnet, dass** jene Saugeinrichtung aus doppelt wirkenden Spiralelementen (2,11) besteht, durch welche Blätter und sonstiger Abfall zerschnitten und durch die Transporteinrichtung (1,1',4,4',5,5',6,6') hoch zur Sammeleinrichtung (7) gesaugt werden.

2. Vorrichtung gemäß Anspruch 1, **dadurch gekennzeichnet, dass** die genannte Transporteinrichtung eine Kammer (1) mit einer Einlassleitung zum Ansaugen (4) und einer Auslassleitung (5) aufweist, welche über eine weitere Transportleitung (6) in die Sammeleinrichtung (7) führt.

3. Vorrichtung gemäß Anspruch 2, **dadurch gekennzeichnet, dass** die Kammer (1) aus zwei symmetrischen Hälften besteht, welche durch abnehmbare Verbindungselemente (8) zusammengefügt werden.

4. Vorrichtung gemäß Anspruch 1, **dadurch gekennzeichnet, dass** es sich bei der abnehmbaren Sicherungeinrichtung (9,10) um eine schraubbare Einrichtung handelt.

5. Vorrichtung gemäß Anspruch 1, **dadurch gekennzeichnet, dass** der vorgenannte Teil (3) das Seitenteil des Gartenschneidgerätes bildet.

6. Vorrichtung gemäß Anspruch 2, **dadurch gekennzeichnet, dass** die genannte zusätzliche Leitung (6) eine Schlauchleitung darstellt.

7. Vorrichtung gemäß Anspruch 2, **dadurch gekennzeichnet, dass** die genannte Sammeleinrichtung (7) aus einem abnehmbaren Beutel besteht.

8. Vorrichtung gemäß Anspruch 7, **dadurch gekennzeichnet, dass** es sich beim vorgenannten Beutel um einen Wegwerfbeutel handelt.

9. Vorrichtung gemäß Anspruch 1, **dadurch gekennzeichnet, dass** die spiralförmige Ansaugvorrichtung (2) aus einer Kunststoffspirale besteht.

10. Vorrichtung gemäß Anspruch 1, **dadurch gekennzeichnet, dass** mindestens eines der Bauteile bestehend aus Kammer (1), Leitungen (4, 5), Beutel (7) aus einem Kunststoff besteht.

11. Vorrichtung gemäß Anspruch 1, **dadurch gekennzeichnet, dass** die genannte spiralförmige Ansaugeinrichtung (2) aus einem spiralförmigen Blatt (11) besteht, das sich in der Nähe der Ansaugöffnung von Leitung (4) dreht.

12. Vorrichtung gemäß Anspruch 11, **dadurch gekennzeichnet, dass** das vorgenannte Blatt aus Metall besteht.

13. Vorrichtung gemäß Anspruch 1, **dadurch gekennzeichnet, dass** die genannte Transporteinrichtung (1', 4', 5', 6') waagrecht angeordnet ist.

14. Vorrichtung gemäß Anspruch 13, **dadurch gekennzeichnet, dass** die genannte Transporteinrichtung eine schildförmige Kammer (1') mit einer seitlichen Auslassleitung (5') aufweist.

15. Vorrichtung gemäß Anspruch 14, **dadurch gekennzeichnet, dass** sie eine Mehrzahl von Rädern (12) aufweist.

16. Vorrichtung gemäß Anspruch 15, **dadurch gekennzeichnet, dass** die genannten Räder auf unterschiedliche Höhen eingestellt werden können.

17. Vorrichtung gemäß Anspruch 1, **dadurch gekennzeichnet, dass** die genannten Einrichtungen zur Befestigung der Ansaugkammer (1) am Seitenteil des Gartenschneidgerätes (3) aus einer Ringdichtung (91) bestehen, die zwei kugelhaubenförmige Hälften aufweist, von denen jeweils eine in die entsprechende Hälfte der Ansaugkammer eingefügt ist; diese kugelhaubenförmigen Hälften werden auf einem im wesentlichen kugelförmigen Teil (31) zusammengedrückt, das am Seitenteil (3) in vorbestimmter Lage befestigt ist.

18. Vorrichtung gemäß Anspruch 17, **dadurch gekennzeichnet, dass** die vorgenannte Kammer (1) ein Gehäuse (92) aufweist, das zur Aufnahme des Sicherheitsschildes bestimmt ist, der nach Wahl über dem Drehkopf des Gartenschneidgerätes angeordnet werden kann.

## Revendications

1. Dispositif d'aspiration auxiliaire pour des dispositifs de coupe de jardin à tête rotative comprenant des moyens d'aspiration (2, 11) montés sur l'arbre d'entraînement au lieu de la tête rotative, des moyens de transport (1, 1', 4, 4', 5, 5', 6, 6') ainsi que des moyens de collecte (7), lesdits moyens de transport et de collecte étant fixés sur une partie (3) du dispositif de coupe de jardin par des moyens de fixation amovibles (9, 91, 10), **caractérisé en ce que** lesdits moyens d'aspiration se composent d'éléments formant hélice à double action (2, 11) au moyen desquels des feuilles ainsi que d'autres débris sont coupés et aspirés à travers lesdits moyens de transport (1, 1', 4, 4', 5, 5', 6', 6') jusqu'auxdits moyens de collecte (7).

2. Dispositif selon la revendication 1, **caractérisé en ce que** lesdits moyens de transport comprennent une chambre (1) ayant un conduit d'entrée d'aspiration (4) et un conduit de sortie (5) menant jusque dans lesdits moyens de collecte (7) à travers un conduit de transport supplémentaire (6).

3. Dispositif selon la revendication 2, **caractérisé en ce que** ladite chambre (1) se compose de deux demi-parties symétriques jointes à l'aide de moyens de connexion amovibles (8).

4. Dispositif selon la revendication 1, **caractérisé en ce que** lesdits moyens de fixation amovibles (9, 10) sont des moyens formant vis.

5. Dispositif selon la revendication 1, **caractérisé en ce que** ladite partie (3) constitue le bras du dispositif de coupe de jardin.

6. Dispositif selon la revendication 2, **caractérisé en ce que** ledit conduit supplémentaire (6) est un conduit flexible.

7. Dispositif selon la revendication 2, **caractérisé en ce que** lesdits moyens de collecte (7) se composent d'un sac amovible.

8. Dispositif selon la revendication 7, **caractérisé en ce que** ledit sac est un sac jetable.

9. Dispositif selon la revendication 1, **caractérisé en ce que** lesdits moyens d'aspiration formant hélice (2) se composent d'une hélice en plastique.

10. Dispositif selon la revendication 1, **caractérisé en ce qu'**au moins un composant parmi la chambre (1), les conduits (4, 5) et le sac (7) est fabriqué à partir de matière plastique.

11. Dispositif selon la revendication 1, **caractérisé en ce que** lesdits moyens d'aspiration formant hélice (2) se composent d'une lame en forme d'hélice (11) qui pivote à proximité de l'ouverture d'aspiration du conduit (4).

12. Dispositif selon la revendication 11, **caractérisé en ce que** ladite lame est fabriquée à partir de métal.

13. Dispositif selon la revendication 1, **caractérisé en ce que** lesdits moyens de transport (1', 4', 5', 6') sont disposés de manière horizontale.

14. Dispositif selon la revendication 13, **caractérisé en ce que** lesdits moyens de transport comprennent une chambre en forme d'écran de protection (1') ayant un conduit de sortie latérale (5').

15. Dispositif selon la revendication 14, **caractérisé en ce qu'**il comprend une pluralité de roues (12).

16. Dispositif selon la revendication 15, **caractérisé en ce que** lesdites roues peuvent être positionnées à des hauteurs différentes.

17. Dispositif selon la revendication 1, **caractérisé en ce que** lesdits moyens destinés à fixer la chambre d'aspiration (1) au bras du dispositif de coupe de jardin (3) se composent d'un joint sphérique (91) comprenant deux demi-parties en forme de couvercles sphériques, chacune construite dans la demi-partie de chambre d'aspiration correspondante ; lesdites demi-parties en forme de couvercles sphériques sont assemblées en les poussant ensemble sur un corps sensiblement sphérique (31) qui est fixé sur le bras (3) dans une position prédéterminée.

18. Dispositif selon la revendication 17, **caractérisé en ce que** ladite chambre (1) comprend une boîte (92) destinée à loger l'écran de protection qui peut éventuellement être placée par-dessus la tête rotative du dispositif de coupe de jardin.
